# EUROPÄISCHE PATENTSCHRIFT

(11) **EP 1 892 079 B1**
(45) Veröffentlichungstag und Bekanntmachung des Hinweises auf die Patenterteilung: **13.05.2009**
(21) Anmeldenummer: 07114773.0
(22) Anmeldetag: 22.08.2007
(51) Int. Cl.: B29C 70/84, B29C 70/12, B29C 70/14, B29C 65/00, B29C 65/50, B29C 45/14

(54) **Verbundstruktur und Verfahren zur Herstellung einer Verbundstruktur**
Composite structure and method for its manufacture
Structure composite et procédé de fabrication d'une structure composite

(30) Priorität: 24.08.2006 DE 102006041653
(43) Veröffentlichungstag der Anmeldung: 27.02.2008
(73) Patentinhaber: Deutsches Zentrum für Luft- und Raumfahrt e.V., 51147 Köln (DE)
(72) Erfinder: Keck, Rüdiger, 74081 Heilbronn (DE)
(74) Vertreter: Hoeger, Stellrecht & Partner Patentanwälte

(56) Entgegenhaltungen:
- WO-A-20/04078461
- DE-A1- 2 039 876
- DE-A1- 3 635 031
- DE-A1- 10 143 564
- JP-A- 56 075 824
- US-A- 4 029 837
- US-A- 5 506 293

## Beschreibung

Die Erfindung betrifft eine Verbundstruktur, umfassend ein erstes Bauteil aus einem Faserverbundwerkstoff und mindestens ein weiteres zweites Bauteil aus einem Faserverbundwerkstoff mit thermoplastischer Matrix, welches mit dem ersten Bauteil verbunden ist.

In der nicht vorveröffentlichten DE 10 2005 034 621 B3 ist eine Verbundstruktur beschrieben, welche ein erstes Bauteil aus einem Faserverbundwerkstoff mit thermoplastischer Matrix und mindestens ein weiteres zweites Bauteil aus einem Faserverbundwerkstoff mit thermoplastischer Matrix umfasst. Das zweite Bauteil ist mit dem ersten Bauteil verbunden, wobei das zweite Bauteil einen Tragebereich aus mit Endlosfasern verstärktem Werkstoff und einen Flanschbereich aus kurzfaserverstärktem Werkstoff umfasst und über den Flanschbereich mit dem ersten Bauteil verbunden ist.

In der genannten Druckschrift ist ferner ein Verfahren zur Herstellung einer Verbindung zwischen einem ersten Bauteil aus einem Faserverbundwerkstoff mit thermoplastischer Matrix und einem zweiten Bauteil aus einem Faserverbundwerkstoff beschrieben, bei dem das zweite Bauteil mit einem Flanschbereich aus kurzfaserverstärktem Werkstoff mit thermoplastischer Matrix versehen wird und der Flanschbereich mit dem ersten Bauteil durch Schweißen verbunden wird.

Aus der DE 20 2004 007 400 U1 ist ein flächiges Halbzeug auf Basis eines glasfaserverstärkten thermoplastischen Kunststoffs bekannt, welches dadurch hergestellt ist, dass zumindest eine Bahn A aus einem Faservlies mit einem bestimmten Flächengewicht auf eine Bahn B aus einem Mischfasergewebe mit einem bestimmten Flächengewicht aufgepresst wird, wobei die Faserstränge des Mischfasergewebes sowohl in Längsrichtung als auch in Querrichtung aus einer Mischung von Thermoplastfasern und Glasfasern bestehen, und das Aufpressen bei Temperaturen oberhalb des Erweichungsbereichs des Thermoplasten ausgeführt wird.

Aus der US 5,871,604 ist ein Verfahren zur Formung eines faserverstärkten Gegenstands bekannt, bei dem eine Mehrzahl von Matrixlagen hergestellt wird, eine Mehrzahl von Faserlagen hergestellt wird, die Faserlagen und die Matrixlagen auf einer formenden Oberfläche abwechselnd gelegt werden, ein Druckgradient von der Außenseite der aufgebauten Lage zu der formenden Oberfläche hin ausgeübt wird, um ein flüssiges Harz zum Fließen durch die Flächen zwischen den Matrixlagen und den Faserlagen zu bringen, und bei dem das Harz anschließend ausgehärtet wird.

Aus der FR 2 876 954 A1 ist ein thermoplastischer Gegenstand bekannt, welcher einen ersten Körper aus einem Material mit einer ersten thermoplastischen Matrix umfasst. Weiter ist mindestens ein Verstärkungselement vorgesehen, welches aus einem Material mit einer zweiten thermoplastischen Matrix und Fasern parallel zueinander besteht. Die erste und die zweite thermoplastische Matrix sind aus einem Material aus der gleichen Familie wie das Material für das Verstärkungselement.

Aus der WO 93/22135 ist ein Verfahren zum Herstellen eines faserverstärkten Kunststoff-Sandwichbauteiles bekannt, wobei zwei Platten mittels eines mit faserverstärktem gespritztem Materials verbunden sind. Der Verbindungsbereich besitzt sehr gute Verbindungseigenschaften.

Der Erfindung liegt die Aufgabe zugrunde, eine Verbundstruktur der eingangs genannten Art bereitzustellen, welche auf einfache Weise herstellbar ist.

Diese Aufgabe wird bei der eingangs genannten Verbundstruktur erfindungsgemäß dadurch gelöst, dass das zweite Bauteil einen Tragebereich und einen Verbindungsbereich aufweist, wobei der Verbindungsbereich quer zum Tragebereich orientiert ist und über den Verbindungsbereich das zweite Bauteil an dem ersten Bauteil fixiert ist, und dass zwischen dem Verbindungsbereich und dem ersten Bauteil eine Schicht aus kurzfaserverstärktem Material angeordnet ist.

Die erfindungsgemäße Verbundstruktur lässt sich auf einfache Weise herstellen; das zweite Bauteil lässt sich auf einfache Weise herstellen. Beispielsweise wird dieses aus einer ebenen Grundplatte durch Umformung hergestellt und die kurzfaserverstärkte Schicht wird dann beispielsweise durch Aufspritzen bzw. Umspritzen auf dem Verbindungsbereich angeordnet.

Es lassen sich dadurch Verbundstrukturen herstellen, welche insbesondere Verstärkungsrippen aufweisen, bei denen der Aufwand für Formen gering gehalten ist und entsprechend die Kosten gering gehalten sind.

Weiterhin ist es möglich, konventionelle Fügetechniken wie beispielsweise Widerstandsschweißen von Thermoplasten und/oder konventionelle Befestigungselemente wie Nieten, Schrauben oder Bolzen zu verwenden.

Durch die kurzfaserverstärkte Schicht zwischen dem ersten Bauteil und dem Verbindungsbereich des zweiten Bauteils lässt sich ein Ausgleich erreichen.

Beispielsweise lässt sich ein Toleranzausgleich bei der Fertigung erreichen. Über die zweite Schicht ist über die Schichtdicke auch eine Anpassung an unterschiedliche Krümmungen des ersten Bauteils möglich. Dadurch wiederum ist es möglich, "Gruppen" von zweiten Bauteilen zu bilden: Es ist möglich, zweite Bauteile mit einheitlichem Tragebereich und Verbindungsbereich herzustellen, wobei die Anpassung an eine spezielle Anwendung (d. h. an jeweilige erste Bauteile) über die kurzfaserverstärkte Schicht und insbesondere deren Schichtdicke erfolgt.

Das Gewicht der Verbundstruktur lässt sich minimieren, da sich die Menge des kurzfaserverstärkten Materials minimieren lässt; die Schichtdicke braucht nur so groß zu sein, dass eine Anpassung an das erste Bauteil erreicht ist.

Die kurzfaserverstärkte Schicht lässt sich auch als Opferlage verwenden.

Es ist beispielsweise auch möglich, die kurzfaserverstärkte Schicht elektrisch isolierend auszubilden, um so eine elektrische Isolierung zwischen dem ersten Bauteil und dem zweiten Bauteil zu erhalten.

Der Kraftfluss zwischen dem ersten Bauteil und dem zweiten Bauteil lässt sich durch die Dicke und die Materialwahl der kurzfaserverstärkten Schicht einstellen.

Die kurzfaserverstärkte Schicht bildet eine Sekundärstruktur für das zweite Bauteil, wobei die Primärstruktur des zweiten Bauteils der Tragebereich und der Verbindungsbereich ist. Es lässt sich eine stabile Verbindung erreichen. Bei Verschweißung des zweiten Bauteils mit dem ersten Bauteil wird die Primärstruktur aufgrund des querliegenden Verbindungsbereichs quer zur Faserrichtung belastet und die Sekundärstruktur wird aufgrund der Faserorientierung in ihr steifer und ist damit höher belastbar. Bei Verbindung des ersten Bauteils und des zweiten Bauteils über Befestigungselemente wie Nieten wird die Sekundärstruktur nur auf Druck belastet, wobei die Sekundärstruktur in ihrer Dickenrichtung aufgrund der Faserorientierung größer ist als die Primärstruktur.

Günstig ist es, wenn die Schicht aus kurzfaserverstärktem Material auf dem Verbindungsbereich des zweiten Bauteils angeordnet ist. Es lässt sich dadurch das zweite Bauteil mit "integrierter" kurzfaserverstärkter Schicht auf einfache Weise herstellen. Es ist insbesondere möglich, das zweite Bauteil mit der kurzfaserverstärkten Schicht in einer konventionellen Spritzgussmaschine herzustellen.

Günstig ist es, wenn die Schicht aus kurzfaserverstärktem Material auf den Verbindungsbereich aufgespritzt ist. Das entsprechende Bauteil lässt sich dadurch mit geringem Formenaufwand und Kostenaufwand herstellen.

Ganz besonders vorteilhaft ist es, wenn das Material für die Schicht aus kurzfaserverstärktem Material unter Erhitzung fließfähig ist. Das Material lässt sich dadurch aufschmelzen und es lässt sich eine optimale Anpassung an das erste Bauteil erhalten. Dadurch lässt sich auf einfache Weise ein Spaltausgleich realisieren.

Günstig ist es, wenn ein Matrixmaterial der Schicht aus kurzfaserverstärktem Material ein Thermoplast ist. Das Material lässt sich dadurch aufschmelzen und fließfähig machen. Die kurzfaserverstärkte Schicht lässt sich mit dem ersten Bauteil über bekannte Schweißverfahren wie Widerstandsschweißen verschweißen.

Insbesondere ist ein Matrixmaterial der Schicht aus kurzfaserverstärktem Material das gleiche wie ein Matrixmaterial des ersten Bauteils und/oder des zweiten Bauteils. Dadurch lässt sich eine gute Verbindung zwischen dem ersten Bauteil und/oder zweiten Bauteil erreichen.

Ganz besonders vorteilhaft ist es, wenn das zweite Bauteil mindestens in der Umgebung des Verbindungsbereichs eine L-förmige Querschnittsgestalt hat. Ein solches zweites Bauteil lässt sich auf einfache Weise beispielsweise aus einer ebenen Grundplatte herstellen. Es lässt sich erreichen, dass Fasern von dem Tragebereich in den Verbindungsbereich durchgehen. Es wird ein Bügel bereitgestellt, mittels welchem sich das zweite Bauteil an dem ersten Bauteil fixieren lässt.

Günstig ist es insbesondere, wenn das zweite Bauteil mindestens in der Umgebung des Verbindungsbereichs plattenförmig ausgebildet ist, wobei der Verbindungsbereich quer zu einem Grundkörper orientiert ist. Dadurch lässt sich das zweite Bauteil mit dem querliegenden Verbindungsbereich auf einfache Weise beispielsweise durch Umformen in einer Heizpresse herstellen.

Ganz besonders vorteilhaft ist es, wenn das erste Bauteil durch Endlosfasern und/oder Langfasern verstärkt ist. Dadurch erhält man eine hohe Steifigkeit für das erste Bauteil insbesondere in Faserrichtung.

Aus dem gleichen Grund ist es günstig, wenn das zweite Bauteil durch Endlosfasern und/oder Langfasern verstärkt ist. Insbesondere lässt sich dadurch auf einfache Weise eine Verstärkungsrippe ausbilden, wobei die Fasern entsprechend orientiert sind.

Ganz besonders vorteilhaft ist es, wenn Fasern im zweiten Bauteil von dem Verbindungsbereich in den Tragebereich durchgehen. Dadurch erhält man eine stabile einstückige Verbindung zwischen dem Verbindungsbereich und dem Tragebereich, über den optimiert Kräfte von dem Verbindungsbereich in den Tragebereich einleitbar sind.

Bei einem Ausführungsbeispiel sind das erste Bauteil und das zweite Bauteil über Verschweißung verbunden. Die Verbindung lässt sich auf einfache Weise herstellen.

Alternativ oder zusätzlich ist es möglich, dass das erste Bauteil und das zweite Bauteil über mindestens ein Befestigungselement verbunden ist, welches durch das erste Bauteil und das zweite Bauteil geführt ist. Es lassen sich konventionelle Befestigungselemente wie Nieten, Schrauben oder Bolzen einsetzen. Die Verbindung lässt sich dadurch auf einfache Weise herstellen bzw. sichern.

Insbesondere ist ein Matrixmaterial des ersten Bauteils ein Thermoplast. Dadurch lässt sich beispielsweise die kurzfaserverstärkte Schicht mit dem ersten Bauteil über Schweißen verbinden.

Günstig ist es, wenn das zweite Bauteil eine Verstärkungsrippe bildet. Es lassen sich Kräfte optimiert abführen, um das erste Bauteil entsprechend zu stützen.

Günstig ist es, wenn der Verbindungsbereich mindestens näherungsweise parallel zum ersten Bauteil positioniert ist. Dadurch lässt sich die Verbindung auf einfache Weise herstellen.

Aus dem gleichen Grund ist es günstig, wenn Fasern im Verbindungsbereich des zweiten Bauteils mindestens näherungsweise parallel zum ersten Bauteil orientiert sind. Insbesondere sind Fasern im Verbindungsbereich des zweiten Bauteils mindestens näherungsweise parallel zu Fasern im ersten Bauteil (mindestens in einem Bereich, welcher dem Verbindungsbereich benachbart ist) orientiert. Dadurch erhält man eine optimierte Kräfteeinleitbarkeit und -ableitbarkeit. Ferner lassen sich das erste Bauteil und das zweite Bauteil auf einfache Weise herstellen.

Der Erfindung liegt ferner die Aufgabe zugrunde, ein Verfahren zur Herstellung einer Verbindung zwischen einem ersten Bauteil aus einem Faserverbundwerkstoff und einem zweiten Bauteil aus einem Faserverbundwerkstoff bereitzustellen, welches auf einfache Weise durchführbar ist.

Diese Aufgabe wird erfindungsgemäß dadurch gelöst, dass an dem zweiten Bauteil ein Verbindungsbereich hergestellt wird, welcher quer zu einem Tragebereich ist, eine kurzfaserverstärkte Schicht auf dem Verbindungsbereich positioniert wird, und das zweite Bauteil mit dem ersten Bauteil über den Verbindungsbereich verbunden wird, wobei die kurzfaserverstärkte Schicht an dem ersten Bauteil anliegt.

Das erfindungsgemäße Verfahren weist die bereits im Zusammenhang mit der erfindungsgemäßen Verbundstruktur erläuterten Vorteile auf.

Weitere vorteilhafte Ausgestaltungen wurden ebenfalls bereits im Zusammenhang mit der erfindungsgemäßen Verbundstruktur erläutert.

Das zweite Bauteil mit der kurzfaserverstärkten Schicht lässt sich auf einfache Weise herstellen, wenn diese durch Spritzguss auf den Verbindungsbereich aufgebracht wird. Es lassen sich dabei insbesondere konventionelle Spritzgussmaschinen einsetzen. Dadurch ist die Herstellung des zweiten Bauteils kostengünstig durchführbar.

Es ist ferner günstig, wenn das zweite Bauteil mit dem ersten Bauteil durch Verschweißung und/oder über ein oder mehrere Befestigungselemente verbunden wird. Dadurch lässt sich die belastbare Verbindung auf einfache Weise herstellen.

Bei einer Ausführungsform wird das zweite Bauteil aus einer Grundplatte durch Umformung hergestellt. Die Umformung kann in einer Heizpresse oder auf einer entsprechenden Positivform erfolgen.

Ganz besonders vorteilhaft ist es, wenn die kurzfaserverstärkte Schicht aus bei Erhitzung fließfähigem Material hergestellt wird. Dadurch erhält man eine optimierte Anpassung der kurzfaserverstärkten Schicht an das erste Bauteil. Dadurch erhält man einen optimierten Spaltausgleich.

Die nachfolgende Beschreibung bevorzugter Ausführungsformen dient im Zusammenhang mit der Zeichnung der näheren Erläuterung der Erfindung. Es zeigen:
- Figur 1: eine schematische Darstellung eines Ausführungsbeispiels einer erfindungsgemäßen Verbundstruktur in Schnittansicht;
- Figur 2: eine vergrößerte Darstellung des Bereichs A gemäß Figur 1;
- Figur 3: perspektivisch eine Experimentalversion einer Flügelvorderkante als Ausführungsbeispiel einer erfindungsgemäßen Verbundstruktur; und
- Figur 4: eine Schnittansicht der Experimentalversion gemäß Figur 3.

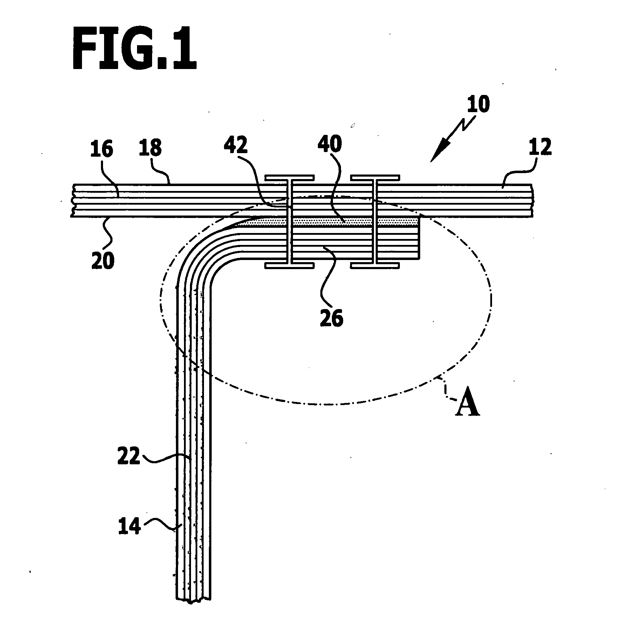

Ein Ausführungsbeispiel einer erfindungsgemäßen Verbundstruktur, welches in Figur 1 gezeigt und dort mit 10 bezeichnet ist, umfasst ein erstes Bauteil 12 und als weiteres Bauteil ein zweites Bauteil 14, wobei die beiden Bauteile 12 und 14 miteinander verbunden sind. Es können auch ein drittes Bauteil, viertes Bauteil usw. vorgesehen sein, welche jeweils mit dem ersten Bauteil 12 verbunden sind. Es ist grundsätzlich auch möglich, dass ein oder mehrere weitere Bauteile mit dem zweiten Bauteil 14 verbunden sind. Das erste Bauteil 12 ist aus einem Faserverbundwerkstoff (CFK) hergestellt, bei dem Fasern 16 in ein Matrixmaterial eingebettet sind. Das Matrixmaterial ist insbesondere ein thermoplastisches Matrixmaterial wie PEEK.

Das erste Bauteil 12 ist durch Endlosfasern und/oder Langfasern verstärkt. Als Endlosfasern werden Fasern bezeichnet, die in der Form von Rovings (Faserbündel bzw. Faserstränge) oder Geweben bzw. Gewirken verarbeitet werden und deren Länge konstruktionsbedingt ist oder durch die geometrische Abmessung des entsprechenden Bauteils bedingt ist. Unter Kurzfasern werden hier Fasern mit einer Länge bis 50 mm verstanden, wobei die Länge insbesondere unterhalb von 3 mm liegt. Unter Langfasern werden hier Fasern verstanden, welche eine Länge größer 50 mm aufweisen.

Die Fasern im ersten Bauteil 12 sind mindestens näherungsweise parallel zu einer ersten Oberfläche 18 und einer gegenüberliegenden zweiten Oberfläche 20 des ersten Bauteils 12 orientiert. Es können dabei auch Querorientierungen und insbesondere Senkrechtorientierungen von Fasern relativ zueinander vorgesehen sein.

Das erste Bauteil 12 kann ohne Krümmung ausgebildet sein (wie in Figur 1 gezeigt) oder gekrümmt wie beispielsweise schalenförmig ausgebildet sein.

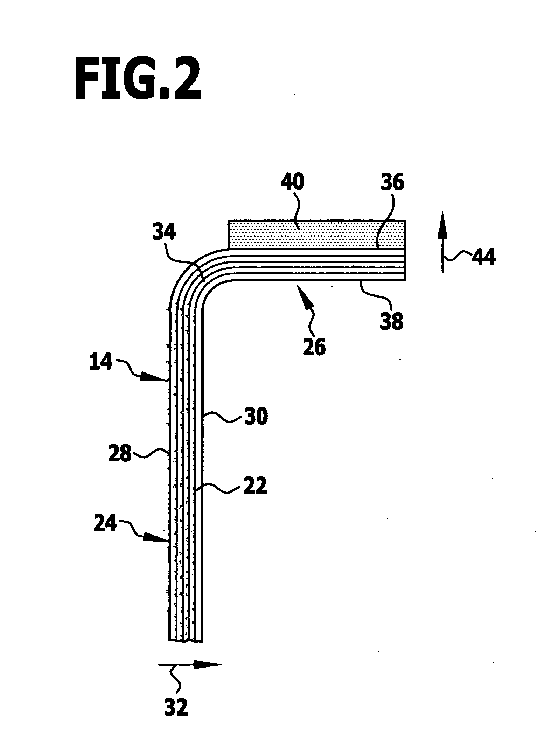

Das zweite Bauteil 14 (Figuren 1 und 2) ist ebenfalls aus einem Faserverbundwerkstoff hergestellt, bei dem Fasern 22 in der Form von Endlosfasern und/oder Langfasern in einem thermoplastischen Material eingebettet sind.

Das zweite Bauteil 14 umfasst einen Tragebereich 24 und einen Verbindungsbereich 26. Der Tragebereich 24 ist insbesondere plattenförmig ausgestaltet mit einer ersten Oberfläche 28 und einer gegenüberliegenden zweiten Oberfläche 30. Zwischen diesen beiden Oberflächen 28 und 30 erstreckt sich der Tragebereich 24, wobei die Fasern 22 im Tragebereich 24 mindestens näherungsweise parallel zu der ersten Oberfläche 28 und der zweiten Oberfläche 30 orientiert sind. Eine Dickenrichtung 32 weist von der ersten Oberfläche 28 zu der zweiten Oberfläche 30.

Das zweite Bauteil 14 dient beispielsweise als Verstärkungsrippe, wobei der Tragebereich 24 der eigentliche Trageteil ist. Der Verbindungsbereich 26, welcher quer und beispielsweise mindestens näherungsweise senkrecht zu dem Tragebereich 24 angeordnet ist, dient zur Verbindung des zweiten Bauteils 14 mit dem ersten Bauteil 12 und damit zur Herstellung der Verbundstruktur 10.

Die Fasern 22 im Tragebereich 24 gehen durch in den Verbindungsbereich 26, d. h. verlaufen ohne Unterbrechung in den Verbindungsbereich 26. Durch diesen Verlauf sind die entsprechenden Fasern 22 in einem Biegungsbereich 34, an welchem der Tragebereich 24 in den Verbindungsbereich 26 übergeht, in ihrer Verlaufsrichtung umgelenkt. Dadurch wird eine Querorientierung der Fasern 22 in dem Verbindungsbereich 26 im Vergleich zu dem Tragebereich 24 erreicht. Beispielsweise erfolgt in dem Biegungsbereich 34 eine Umlenkung um mindestens näherungsweise 90°.

Die Fasern 22 sind im Tragebereich 24 mindestens näherungsweise parallel zur ersten Oberfläche 28 und zur zweiten Oberfläche 30. Auch im Verbindungsbereich 26 sind sie mindestens näherungsweise parallel zu einer ersten Oberfläche 36 und einer zweiten Oberfläche 38 des Verbindungsbereichs 26. Die erste Oberfläche 36 liegt dabei quer und insbesondere mindestens näherungsweise senkrecht zur ersten Oberfläche 28 und die zweite Oberfläche 38 liegt quer und insbesondere senkrecht zur zweiten Oberfläche 30.

Beispielsweise verlaufen die Fasern 22 in dem Verbindungsbereich 26 mindestens näherungsweise parallel zur Dickenrichtung 32 im Tragebereich 24.

Das zweite Bauteil 14 hat insbesondere eine L-förmige Querschnittsgestalt. Durch den Verbindungsbereich 26 ist ein Bügel oder Flansch bereitgestellt, über welchen sich die Verbundstruktur 10 mit der Fixierung des zweiten Bauteils 14 an dem ersten Bauteil 12 realisieren lässt.

An der ersten Oberfläche 36 des Verbindungsbereichs 26 des zweiten Bauteils 14 ist eine Schicht 40 aus kurzfaserverstärktem Material angeordnet. Es sind dabei Kurzfasern (mit einer Länge kleiner 50 mm und insbesondere kleiner 3 mm) in einem thermoplastischen Matrixmaterial eingebettet. Das thermoplastische Matrixmaterial ist das gleiche Matrixmaterial wie dasjenige des zweiten Bauteils 14 am Verbindungsbereich 26.

Die Schicht 40 ist auf dem Verbindungsbereich 26 beispielsweise durch Aufspritzen bzw. Umspritzen in einem Spritzgussverfahren hergestellt.

Das erste Bauteil 12 und das zweite Bauteil 14 sind über den Verbindungsbereich 26 des zweiten Bauteils 14 verbunden, wobei die kurzfaserverstärkte Schicht 40 zwischen dem ersten Bauteil 12 und dem Verbindungsbereich 26 liegt.

Das zweite Bauteil 14 ist mit dem ersten Bauteil 12 beispielsweise durch Verschweißen verbunden, wobei die Schicht 40 mit dem ersten Bauteil 12 verbunden ist.

Es kann alternativ oder zusätzlich vorgesehen sein, dass das erste Bauteil 12 und das zweite Bauteil 14 über ein oder mehrere Befestigungselemente 42 verbunden sind, wobei das oder die Befestigungselemente 42 durch das erste Bauteil 12 und den Verbindungsbereich 26 (und auch durch die Schicht 40) durchgehen.

Beispielsweise ist ein Befestigungselement 42 durch ein Nietelement, ein Schraubenelement oder ein Bolzenelement gebildet.

Der Verbindungsbereich 26 des zweiten Bauteils 14 ist in der Verbundstruktur 10 mindestens näherungsweise parallel zu dem ersten Bauteil 12 orientiert. Der Tragebereich 24 ist quer zu dem ersten Bauteil 12 orientiert. Beispielsweise liegt der Tragebereich 24 senkrecht zum ersten Bauteil 12. Die Fasern 22 im Verbindungsbereich verlaufen mindestens näherungsweise parallel zum ersten Bauteil 12, während die Fasern 22 im Tragebereich 24 quer dazu liegen.

Die Schicht 40 und insbesondere ihre Dicke ist an die spezielle Anwendung angepasst. Es ist dadurch möglich, das zweite Bauteil 14 an das erste Bauteil 12 und insbesondere an deren Krümmungen über die Schicht 40 anzupassen. Es ist dadurch möglich, eine oder wenige Grundformen für den Tragebereich 24 und den Verbindungsbereich 26 zu verwenden. Die "Anpassung" des zweiten Bauteils 14 an das erste Bauteil 12 erfolgt über die spezielle Ausbildung der kurzfaserverstärkten Schicht 40.

Beispielsweise wird bei unterschiedlichen Krümmungen des ersten Bauteils 12 eine Sorte von Tragebereichen 24 mit daran einstückig verbundenem Verbindungsbereich 26 hergestellt. Die Anpassung an die unterschiedlichen Krümmungen erfolgt über die Dicke der Schicht 40. Die kurzfaserverstärkte Schicht lässt sich dabei relativ dünn aufbringen.

Da sich die Dicke der Schicht 40 relativ gering halten lässt, kann die kurzfaserverstärkte Schicht 40 auf einfache Weise auf dem Verbindungsbereich 26 hergestellt werden. Insbesondere ist eine Herstellung in einem Spritzgussvorgang möglich und es können handelsübliche Spritzgussmaschinen eingesetzt werden. Das zweite Bauteil 14 lässt sich auch mit relativ geringem Gewicht herstellen, da die kurzfaserverstärkte Schicht 40 mit geringer Dicke (angepasst an die Form des ersten Bauteils 12) hergestellt werden kann.

Es ist möglich, das erste Bauteil 12 und das zweite Bauteil 14 mit der Schicht 40, die an dem ersten Bauteil 12 anliegt, über Befestigungselemente 42 wie Nieten und Schrauben zu verbinden. Die Schicht 40 mit dem kurzfaserverstärkten Material, welche eine Sekundärstruktur des zweiten Bauteils 14 bildet, wird über Befestigungselemente 42 nur auf Druck belastet. In einer Dickenrichtung 44 (Figur 2) der Schicht 40 ist diese Sekundärstruktur steifer als die Primärstruktur, welche durch den Tragebereich 24 und den Verbindungsbereich 26 gebildet ist. Diese Steifigkeit erfolgt durch die Kurzfaserverstärkung. (Die Kurzfaserverstärkung der Schicht 40 ist insbesondere homogen.)

Bei einer Verschweißung des zweiten Bauteils 14 mit dem ersten Bauteil 12 mittels der Schicht 40 wird die Primärstruktur aufgrund des Verbindungsbereichs 26 quer zur Richtung der Fasern 22 belastet. Die Sekundärstruktur (die Schicht 40) ist auch hier aufgrund der Faserorientierung steifer und höher belastbar.

Die Schicht 40 ist insbesondere aus einem unter Erwärmung fließfähigen Material hergestellt, um eine optimale Anpassung an die Oberflächengestalt der zweiten Oberfläche 20 des ersten Bauteils 12 zu ermögliche. Es lässt sich dadurch bei der Verbindung ein Spaltausgleich über das kurzfaserverstärkte Material der Schicht 40 erhalten.

Weiterhin ist es möglich, die Schicht 40 als Opferlage zwischen dem ersten Bauteil 12 und dem zweiten Bauteil 14 einzusetzen.

Es ist grundsätzlich auch möglich, dass die Schicht 40 als elektrische Isolierungsschicht eingesetzt wird.

Durch die erfindungsgemäße Lösung lassen sich beispielsweise Verstärkungsrippen an dem ersten Bauteil 12 fixieren, welche bei einem reduzierten Aufwand für Formen und bei reduziertem Kostenaufwand hergestellt werden können. Es lassen sich konventionelle Fügetechniken wie beispielsweise Widerstandsschweißen von thermoplastischen Materialien und/oder konventionelle Befestigungselemente wie Nieten und Schrauben verwenden. Ein Toleranzausgleich ist über die Schicht 40 aus fließfähigem Material auf einfache Weise möglich.

Der Tragebereich 24 mit dem angeschlossenen Verbindungsbereich 26 wird insbesondere integral hergestellt. Beispielsweise wird von einer faserverstärkten Grundplatte ausgegangen. An dieser wird in einer Heißpresse oder über eine beheizte Positivform beispielsweise im Vakuumverfahren der Verbindungsbereich 26 hergestellt, d. h. es wird das zweite Bauteil 14 mit L-förmigem Querschnitt hergestellt.

In einem nächsten Schritt wird dann die Schicht 40 durch Aufspritzen von Kurzfasermaterial auf die zweite Oberfläche 38 hergestellt. Dieser Arbeitsschritt erfolgt insbesondere in einer Spritzgussmaschine, wobei insbesondere die Herstellung der kurzfaserverstärkten Schicht 40 im Umspritzverfahren erfolgt.

Die erfindungsgemäße Verbundstruktur 10 lässt sich insbesondere dazu verwenden, schalenförmige Bauteile mit Verstärkungsrippen zu versehen. Die Verstärkungsrippen sind über ein oder mehrere Bauteile entsprechend dem zweiten Bauteil 14 gebildet.

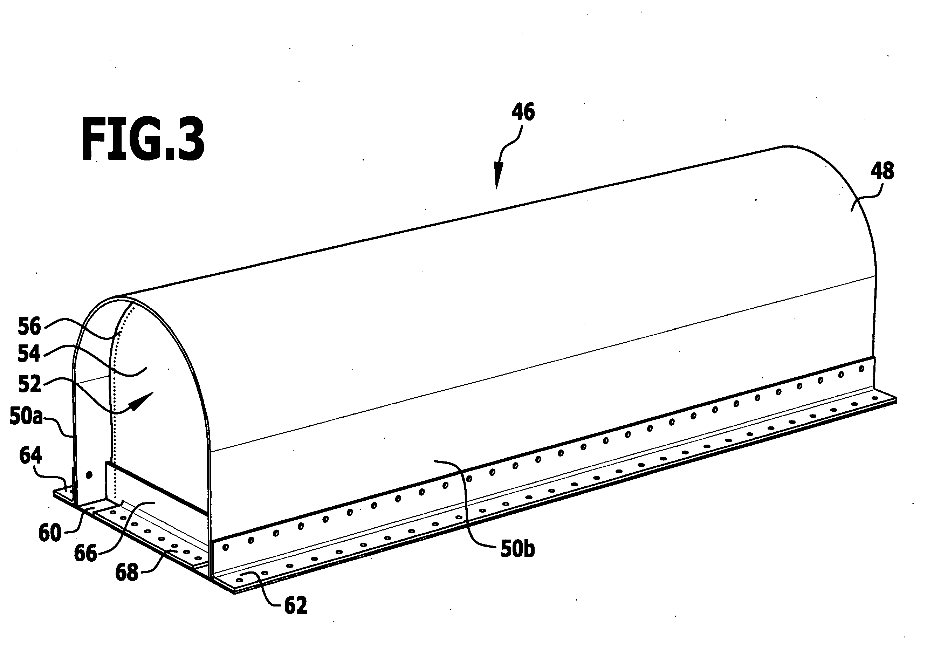

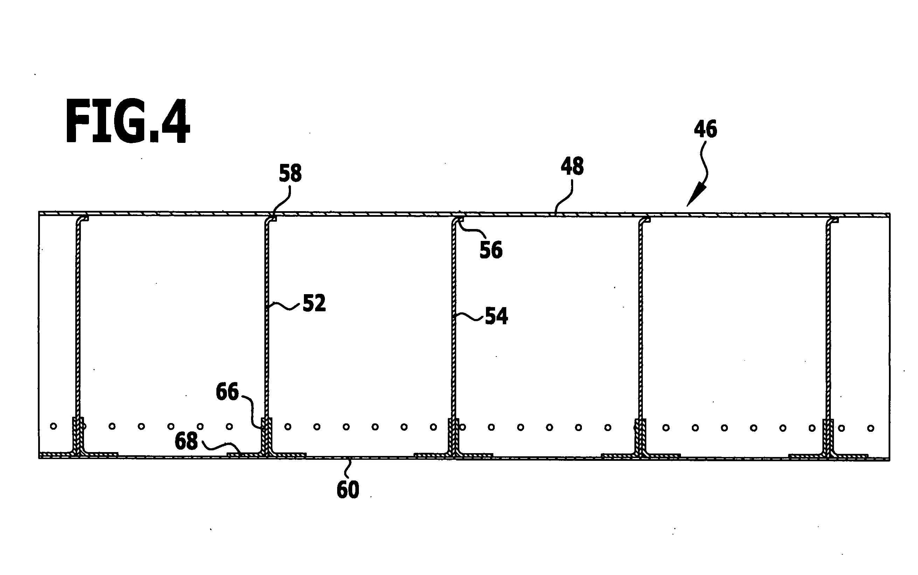

Ein Beispiel für einen Einsatz der erfindungsgemäßen Verbundstruktur ist eine Flügelvorderkante. Ein Ausführungsbeispiel einer solchen Flügelvorderkante in einer Experimentalversion ist in den Figuren 3 und 4 gezeigt und dort mit 46 bezeichnet. Eine Flügelvorderkante ist ein Teil eines Hauptflügels oder eines Leitwerks. Die Flügelvorderkante bildet bezogen auf die Flugrichtung das Ende einer Flügelfläche. Eine Flügelvorderkante kann am Hauptflügel beweglich gelagert sein und dann als Auftriebshilfe dienen.

Die Flügelvorderkante 46 (in der Experimentalversion) umfasst eine schalenförmige Außenhülle 48 aus einem Faserverbundwerkstoff mit Endlosfasern, welche in eine thermoplastische Matrix eingebettet sind. Die Außenhülle 48 entspricht dem ersten Bauteil 12. Die Außenhülle 48 ist gekrümmt ausgebildet mit einander gegenüberliegenden Wandbereichen 50a, 50b. Es sind Verstärkungsrippen 52 vorgesehen, welche die schalenförmige Außenhülle 48 abstützen. Die Verstärkungsrippen 52 sind beabstandet zueinander angeordnet und entsprechen jeweils dem zweiten Bauteil 14.

Die Verstärkungsrippen 52 umfassen jeweils einen Tragebereich 54, welcher dem Tragebereich 24 entspricht, und einen daran angeordneten bügelförmigen Verbindungsbereich 56, welcher dem Verbindungsbereich 26 entspricht. Über den Verbindungsbereich 56 sind die Verstärkungsrippen 52 mit der Außenhülle 48 verbunden.

Zwischen dem Verbindungsbereich 56 und dem Verstärkungsbereich 52 jeder Verstärkungsrippe 52 ist jeweils eine kurzfaserverstärkte Schicht 58 angeordnet.

In einer Experimentalversion für Beschusstests weist die Flügelvorderkante 46 einen Boden 60 auf, welcher die Außenhülle 48 an einer offenen Längsseite abschließt.

Bei der Verbindung der Verstärkungsrippen 52 mit der Außenhülle 48 ist die Außenhülle 48 offen, so dass Verstärkungsrippen 52 gegen die Außenhülle 48 mit einem Anpressdruck gedrückt werden können. Die Verstärkungsrippen 52 sind mittels der jeweiligen Schichten 58 an der Außenhülle 48 fixiert. Die Fixierung erfolgt über Verschweißung und/oder Befestigungselemente 42 wie oben beschrieben.

Nach der Herstellung der Verbundstruktur 10 wird der Boden 60 fixiert.

Dazu sind beispielsweise ein erstes Nietband 62 und ein zweites Nietband 64 vorgesehen. Die beiden Nietbänder 62 und 64 sind jeweils mit der Außenhülle 48 verbunden. Dadurch ist auch eine Verbindung zwischen dem Boden 60 und der Außenhülle 48 hergestellt. Die Nietbänder 62 und 64 können ebenfalls aus einem Faserverbundwerkstoff hergestellt sein.

Die Verstärkungsrippen 52 können jeweils mit einem Anschluss 66 beispielsweise in der Form eines Inserts versehen sein. In einen solchen Anschluss lässt sich jeweils ein Nietband 68 oder ein Versteifungswinkel eintauchen, welches mit dem Boden 60 fixierbar ist. Dadurch lässt sich die jeweilige Verstärkungsrippe 52 auch an dem Boden 60 fixieren. Beispielsweise ist das Nietband 68 bzw. ein entsprechender Versteifungswinkel aus einem Faserverbundwerkstoff hergestellt.

## Patentansprüche

1. Verbundstruktur, umfassend ein erstes Bauteil (12) aus einem Faserverbundwerkstoff und mindestens ein weiteres zweites Bauteil (14) aus einem Faserverbundwerkstoff mit thermoplastischer Matrix, welches mit dem ersten Bauteil (12) verbunden ist, wobei das zweite Bauteil (14) einen Verbindungsbereich (26) aufweist, über den das zweite Bauteil mit dem ersten Bauteil fixiert ist,
**dadurch gekennzeichnet, dass** das zweite Bauteil einen Tragebereich (24) aufweist, wobei der Verbindungsbereich (26) quer zum Tragebereich (24) orientiert ist , und dass zwischen dem Verbindungsbereich (26) und dem ersten Bauteil (12) eine Schicht (40) aus kurzfaserverstärktem Material angeordnet ist.

2. Verbundstruktur nach Anspruch 1, **dadurch gekennzeichnet, dass** die Schicht (40) aus kurzfaserverstärktem Material auf dem Verbindungsbereich (26) des zweiten Bauteils (14) angeordnet ist.

3. Verbundstruktur nach Anspruch 1 oder 2, **dadurch gekennzeichnet, dass** die Schicht (40) aus kurzfaserverstärktem Material auf den Verbindungsbereich (26) aufgespritzt ist.

4. Verbundstruktur nach einem der vorangehenden Ansprüche, **dadurch gekennzeichnet, dass** das Material für die Schicht (40) aus kurzfaserverstärktem Material unter Erhitzung fließfähig ist.

5. Verbundstruktur nach einem der vorangehenden Ansprüche, **dadurch gekennzeichnet, dass** ein Matrixmaterial der Schicht (40) aus kurzfaserverstärktem Material ein Thermoplast ist.

6. Verbundstruktur nach einem der vorangehenden Ansprüche, **dadurch gekennzeichnet, dass** ein Matrixmaterial der Schicht (40) aus kurzfaserverstärktem Material das gleiche ist wie ein Matrixmaterial des ersten Bauteils (12) und/oder des zweiten Bauteils (14).

7. Verbundstruktur nach einem der vorangehenden Ansprüche, **dadurch gekennzeichnet, dass** der Verbindungsbereich (26) als Bügel ausgebildet ist.

8. Verbundstruktur nach einem der vorangehenden Ansprüche, **dadurch gekennzeichnet, dass** das zweite Bauteil (14) mindestens am Verbindungsbereich (26) eine L-förmige Querschnittsgestalt hat.

9. Verbundstruktur nach einem der vorangehenden Ansprüche, **dadurch gekennzeichnet, dass** das zweite Bauteil (14) mindestens in der Umgebung des Verbindungsbereichs (26) plattenförmig ausgebildet ist, wobei der Verbindungsbereich (26) quer zu einem Grundkörper orientiert ist.

10. Verbundstruktur nach einem der vorangehenden Ansprüche, **dadurch gekennzeichnet, dass** das erste Bauteil (12) durch Endlosfasern und/oder Langfasern verstärkt ist.

11. Verbundstruktur nach einem der vorangehenden Ansprüche, **dadurch gekennzeichnet, dass** das zweite Bauteil (14) durch Endlosfasern und/oder Langfasern verstärkt ist.

12. Verbundstruktur nach einem der vorangehenden Ansprüche, **dadurch gekennzeichnet, dass** Fasern im zweiten Bauteil (14) von dem Verbindungsbereich (26) in den Tragebereich (24) durchgehen.

13. Verbundstruktur nach einem der vorangehenden Ansprüche, **dadurch gekennzeichnet, dass** das erste Bauteil (12) und das zweite Bauteil (14) über Verschweißung verbunden sind.

14. Verbundstruktur nach einem der vorangehenden Ansprüche, **dadurch gekennzeichnet, dass** das erste Bauteil (12) und das zweite Bauteil (14) über mindestens ein Befestigungselement (42) verbunden sind, welches durch das erste Bauteil (12) und das zweite Bauteil (14) geführt ist.

15. Verbundstruktur nach einem der vorangehenden Ansprüche, **dadurch gekennzeichnet, dass** ein Matrixmaterial des ersten Bauteils (12) ein Thermoplast ist.

16. Verbundstruktur nach einem der vorangehenden Ansprüche, **dadurch gekennzeichnet, dass** das zweite Bauteil (14) eine Verstärkungsrippe bildet.

17. Verbundstruktur nach einem der vorangehenden Ansprüche, **dadurch gekennzeichnet, dass** der Verbindungsbereich (26) mindestens näherungsweise parallel zum ersten Bauteil (12) orientiert ist.

18. Verbundstruktur nach einem der vorangehenden Ansprüche, **dadurch gekennzeichnet, dass** Fasern (22) im Verbindungsbereich (26) des zweiten Bauteils (14) mindestens näherungsweise parallel zum ersten Bauteil (12) orientiert sind.

19. Verfahren zur Herstellung einer Verbindung zwischen einem ersten Bauteil (12) aus einem Faserverbundwerkstoff und einem zweiten Bauteil (14) aus einem Faserverbundwerkstoff, bei dem am zweiten Bauteil ein Verbindungsbereich hergestellt wird, welcher quer zu einem Tragebereich orientiert ist, eine kurzfaserverstärkte Schicht auf dem Verbindungsbereich (26) positioniert wird, und das zweite Bauteil mit dem ersten Bauteil über den Verbindungsbereich verbunden wird, wobei die kurzfaserverstärkte Schicht an dem ersten Bauteil anliegt.

20. Verfahren nach Anspruch 19, **dadurch gekennzeichnet, dass** die kurzfaserverstärkte Schicht durch Spritzguss auf dem Verbindungsbereich (26) aufgebracht wird.

21. Verfahren nach Anspruch 19 oder 20, **dadurch gekennzeichnet, dass** das zweite Bauteil durch Verschweißung und/oder über ein oder mehrere Befestigungselemente verbunden wird.

22. Verfahren nach einem der Ansprüche 19 bis 21, **dadurch gekennzeichnet, dass** das zweite Bauteil (14) aus einer Grundplatte durch Verformung hergestellt wird.

23. Verfahren nach einem der Ansprüche 19 bis 22, **dadurch gekennzeichnet, dass** die kurzfaserverstärkte Schicht aus einem bei Erwärmung fließfähigen Material hergestellt wird.

## Claims

1. Composite structure comprising a first structural part (12) made of a composite fibre material and at least one further second structural part (14) made of a composite fibre material with a thermoplastic matrix, which is joined to the first structural part (12), wherein the second structural part (14) has a joining region (26), by means of which the second structural part is secured to the first structural part,
**characterised in that** the second structural part has a supporting region (24), wherein the joining region (26) is oriented transversely to the supporting region (24), and that a layer (40) of short-fibre-reinforced material is arranged between the joining region (26) and the first structural part (12).

2. Composite structure according to claim 1, **characterised in that** the layer (40) of short-fibre-reinforced material is arranged on the joining region (26) of the second structural part (14).

3. Composite structure according to claim 1 or 2, **characterised in that** the layer (40) of short-fibre-reinforced material is sprayed onto the joining region (26).

4. Composite structure according to one of the preceding claims, **characterised in that** the material for the layer (40) of short-fibre-reinforced material is flowable when heated.

5. Composite structure according to one of the preceding claims, **characterised in that** a matrix material of the layer (40) of short-fibre-reinforced material is a thermoplastic.

6. Composite structure according to one of the preceding claims, **characterised in that** a matrix material of the layer (40) of short-fibre-reinforced material is the same as a matrix material of the first structural part (12) and/or the second structural part (14).

7. Composite structure according to one of the preceding claims, **characterised in that** the joining region (26) is configured as a bracket.

8. Composite structure according to one of the preceding claims, **characterised in that** the second structural part (14) has an L-shaped cross-sectional structure at least at the joining region (26).

9. Composite structure according to one of the preceding claims, **characterised in that** the second structural part (14) is plate-shaped at least in the surrounding area of the joining region (26), wherein the joining region (26) is oriented transversely to a base body.

10. Composite structure according to one of the preceding claims, **characterised in that** the first structural part (12) is reinforced by continuous fibres and/or long fibres.

11. Composite structure according to one of the preceding claims, **characterised in that** the second structural part (14) is reinforced by continuous fibres and/or long fibres.

12. Composite structure according to one of the preceding claims, **characterised in that** fibres in the second structural part (14) run through from the joining region (26) into the supporting region (24).

13. Composite structure according to one of the preceding claims, **characterised in that** the first structural part (12) and the second structural part (14) are joined by welding.

14. Composite structure according to one of the preceding claims, **characterised in that** the first structural part (12) and the second structural part (14) are joined by means of at least one fastening element (42), which is guided through the first structural part (12) and the second structural part (14).

15. Composite structure according to one of the preceding claims, **characterised in that** a matrix material of the first structural part (12) is a thermoplastic.

16. Composite structure according to one of the preceding claims, **characterised in that** the second structural part (14) forms a reinforcing rib.

17. Composite structure according to one of the preceding claims, **characterised in that** the joining region (26) is oriented at least approximately parallel to the first structural part (12).

18. Composite structure according to one of the preceding claims, **characterised in that** fibres (22) in the joining region (26) of the second structural part (14) are oriented at least approximately parallel to the first structural part (12).

19. Method for forming a connection between a first structural part (12) made of a composite fibre material and a second structural part (14) made of a composite fibre material, in which there is formed on on the second structure part a joining region, which is oriented transversely to a supporting region, a short-fibre-reinforced layer is positioned on the joining region (26), and the second structural part is joined to the first structural part by means of the joining region, wherein the short-fibre-reinforced layer abuts against the first structural part.

20. Method according to claim 19, **characterised in that** the short-fibre-reinforced layer is applied on the joining region (26) by injection moulding.

21. Method according to claim 19 or 20, **characterised in that** the second structural part is joined by welding and/or by means of one or more fastening elements.

22. Method according to one of claims 19 to 21, **characterised in that** the second structural part (14) is produced from a base plate by deformation.

23. Method according to one of claims 19 to 22, **characterised in that** the short-fibre-reinforced layer is produced from a material, which is flowable when heated.

## Revendications

1. Structure composite, comportant un premier composant (12) constitué d'un matériau composite à fibres et au moins un autre second composant (14), constitué d'un matériau composite à fibres doté d'une matrice thermoplastique, lequel est relié au premier composant (12), le second composant (14) comprenant une zone de liaison (26) par l'intermédiaire de laquelle le second composant est fixé au premier composant,
**caractérisée en ce que** le second composant comprend une zone de support (24), la zone de liaison (26) étant orientée transversalement à la zone de support (24), et **en ce qu'**une couche (40) constituée d'un matériau renforcé par des fibres courtes est disposée entre la zone de liaison (26) et le premier composant (12).

2. Structure composite selon la revendication 1, **caractérisée en ce que** la couche (40) constituée d'un matériau renforcé par des fibres courtes est disposée sur la zone de liaison (26) du second composant (14).

3. Structure composite selon la revendication 1 ou 2, **caractérisée en ce que** la couche (40) constituée d'un matériau renforcé par des fibres courtes est projetée sur la zone de liaison (26).

4. Structure composite selon l'une quelconque des revendications précédentes, **caractérisée en ce que** le matériau pour la couche (40) constituée d'un matériau renforcé par des fibres courtes peut s'écouler sous chauffage.

5. Structure composite selon l'une quelconque des revendications précédentes, **caractérisée en ce qu'**un matériau de matrice de la couche (40) constituée d'un matériau renforcé par des fibres courtes est un thermoplastique.

6. Structure composite selon l'une quelconque des revendications précédentes, **caractérisée en ce qu'**un matériau de matrice de la couche (40) constituée d'un matériau renforcé par des fibres courtes est le même qu'un matériau de matrice du premier composant (12) et/ou du second composant (14).

7. Structure composite selon l'une quelconque des revendications précédentes, **caractérisée en ce que** la zone de liaison (26) est conçue comme une boucle.

8. Structure composite selon l'une quelconque des revendications précédentes, **caractérisée en ce que** le second composant (14) présente une section transversale en forme de L au moins au niveau de la zone de liaison (26).

9. Structure composite selon l'une quelconque des revendications précédentes, **caractérisée en ce que** le second composant (14), au moins au voisinage de la zone de liaison (26), est conçu en forme de plaque, la zone de liaison (26) étant orientée transversalement à un corps de base.

10. Structure composite selon l'une quelconque des revendications précédentes, **caractérisée en ce que** le premier composant (12) est renforcé par des fibres continues et/ou des fibres longues.

11. Structure composite selon l'une quelconque des revendications précédentes, **caractérisée en ce que** le second composant (14) est renforcé par des fibres continues et/ou des fibres longues.

12. Structure composite selon l'une quelconque des revendications précédentes, **caractérisée en ce que** les fibres dans le second composant (14) passent de la zone de liaison (26) dans la zone de support (24).

13. Structure composite selon l'une quelconque des revendications précédentes, **caractérisée en ce que** le premier composant (12) et le second composant (14) sont reliés par soudage.

14. Structure composite selon l'une quelconque des revendications précédentes, **caractérisée en ce que** le premier composant (12) et le second composant (14) sont reliés par au moins un élément de fixation (42), lequel est guidé à travers le premier composant (12) et le second composant (14).

15. Structure composite selon l'une quelconque des revendications précédentes, **caractérisée en ce qu'**un matériau de matrice du premier composant (12) est un thermoplastique.

16. Structure composite selon l'une quelconque des revendications précédentes, **caractérisée en ce que** le second composant (14) forme une nervure de renforcement.

17. Structure composite selon l'une quelconque des revendications précédentes, **caractérisée en ce que** la zone de liaison (26) est orientée au moins presque parallèlement au premier composant (12).

18. Structure composite selon l'une quelconque des revendications précédentes, **caractérisée en ce que** les fibres (22) dans la zone de liaison (26) du second composant (14) sont orientées au moins presque parallèlement au premier composant (12).

19. Procédé de fabrication d'une liaison entre un premier composant (12) constitué d'un matériau composite à fibres et un second composant (14) constitué d'un matériau composite à fibres, dans lequel une zone de liaison est établie sur le second composant, laquelle zone est orientée transversalement à une zone de support, une couche renforcée par des fibres courtes est positionnée sur la zone de liaison (26), et le second composant est relié au premier composant par la zone de liaison, la couche renforcée par des fibres courtes étant adjacente au premier composant.

20. Procédé selon la revendication 19, **caractérisé en ce que** la couche renforcée par des fibres courtes est appliquée par moulage par injection sur la zone de liaison (26).

21. Procédé selon la revendication 19 ou 20, **caractérisé en ce que** le second composant est relié par soudage et/ou par un ou plusieurs éléments de fixation.

22. Procédé selon l'une quelconque des revendications 19 à 21, **caractérisé en ce que** le second composant (14) est fabriqué par façonnage à partir d'une plaque de base.

23. Procédé selon l'une quelconque des revendications 19 à 22, **caractérisé en ce que** la couche renforcée par des fibres courtes est fabriquée à partir d'un matériau pouvant s'écouler après avoir été chauffé.
